(19) Europäisches Patentamt
European Patent Office
Office européen des brevets

(11) **EP 3 825 648 B1**

(12) **EUROPEAN PATENT SPECIFICATION**

(45) Date of publication and mention
of the grant of the patent:
**01.04.2026 Bulletin 2026/14**

(21) Application number: **19837560.2**

(22) Date of filing: **04.07.2019**

(51) International Patent Classification (IPC):
*G06V 20/58* (2022.01)      *G06V 10/74* (2022.01)
*G06V 10/75* (2022.01)      *G06V 10/776* (2022.01)
*G06T 7/593* (2017.01)      *G08G 1/16* (2006.01)

(52) Cooperative Patent Classification (CPC):
**G08G 1/165; G06T 7/593; G06V 10/76;
G06V 10/761; G06V 10/776; G06V 20/58;**
G06T 2207/10012; G06T 2207/30261

(86) International application number:
**PCT/JP2019/026564**

(87) International publication number:
**WO 2020/017336 (23.01.2020 Gazette 2020/04)**

(54) **OBJECT DETECTION DEVICE**

OBJEKTERKENNUNGSVORRICHTUNG

DISPOSITIF DE DÉTECTION D'OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2018 JP 2018135482**

(43) Date of publication of application:
**26.05.2021 Bulletin 2021/21**

(73) Proprietor: **Astemo, Ltd.
Tokyo 100-0004 (JP)**

(72) Inventors:
• **OSATO, Takuma
Tokyo 100-8280 (JP)**

• **MATONO, Haruki
Tokyo 100-8280 (JP)**
• **OTSUKA, Yuji
Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(56) References cited:
WO-A1-2013/062087      JP-A- 2013 024 773
JP-A- H1 021 401      US-A1- 2003 227 378

## Description

### Technical Field

The present invention relates to an object detection device.

### Background Art

WO 13/062087 (PTL 1) is provided as the background technology in this technical field.

In the abstract section of the publication, the followings are disclosed. "The accuracy of three-dimensional measurement is improved by suppressing deviation between a measurement point input to one of viewpoint images and the corresponding point set in the other of the viewpoint images. A measurement point (7) which is the reference for three-dimensional measurement is input to a left viewpoint image (6L). The corresponding point (8a) is set on an extension line extending horizontally from the measurement point (7) toward a right viewpoint image 6(R). When the position is adjusted by calibration, a vertical deviation D occurs in the left and right viewpoint images (6L, 6R). When straight lines (24, 27) passing through the measurement points (7) and the corresponding points (8a) of the viewpoint images (6L, 6R) intersect with a horizontal line at a small angle θ, the corresponding point (8a) is erroneously set at a position far away from the true corresponding point (8). In order to prevent the above situation, the left and right viewpoint images (6L, 6R) having an angle θ which is equal to or less than a threshold value S are determined not to be suitable for three-dimensional measurement and then are warned". Additionally, PTL 2 describes an obstacle detection system designed to identify obstacles in a vehicle's path using images captured by cameras, wherein various techniques are employed to analyze image features, particularly focusing on luminance gradients, to distinguish obstacles from other objects like road markings or raindrops on the windshield in order to improve the accuracy of obstacle detection to enhance overall vehicle safety.

### Citation List

### Patent Literature

PTL 1: WO 13/062087
PTL 2: US 2003/227 378 A1

### Summary of Invention

### Technical Problem

PTL 1 discloses means for performing straight-line detection in the vicinity of a measurement point and generating a warning in accordance with the inclination of the straight line. However, since the processing is executed even when high-precision disparity is not required, there are problems that an object may not be detected and the processing cost grows, for example.

An object of the present invention is to provide an object detection device capable of ensuring disparity calculation accuracy even when there is vertical-direction image deviation and suppressing performance degradation and processing cost growth.

### Solution to Problem

In order to achieve the above object, the present invention is set out in the appended set of claims. Preferable embodiments are defined in the dependent claims.

### Advantageous Effects of Invention

According to the present invention, it is possible to provide an object detection device capable of ensuring disparity calculation accuracy even when there is vertical-direction image deviation and suppressing performance degradation and processing cost growth Objects, configurations, and advantageous effects other than those described above will be clarified by the descriptions of the following embodiments.

### Brief Description of Drawings

[FIG. 1] FIG. 1 is a diagram about a disparity error when vertical-direction deviation occurs in a stereo camera.
[FIG. 2] FIG. 2 is a diagram illustrating a configuration of an in-vehicle stereo camera.
[FIG. 3] FIG. 3 is a diagram illustrating a configuration of an object detection device.
[FIG. 4] FIG. 4 is a diagram of rebound due to elimination of a disparity.
[FIG. 5] FIG. 5 is a flowchart of a reliability calculation execution determination unit in Example 1.
[FIG. 6] FIG. 6 is a diagram about a distance-measurement limit distance.
[FIG. 7] FIG. 7 is a diagram about an object-detection limit distance.
[FIG. 8] FIG. 8 is a flowchart of a reliability calculation unit.
[FIG. 9] FIG. 9 is a diagram of a relation between a reliability and an edge angle.
[FIG. 10] FIG. 10 is a flowchart of an object detection unit.
[FIG. 11] FIG. 11 is a flowchart of an object detection unit in Example 2.

### Description of Embodiments

Example 1

A stereo camera system is well known as means for estimating a three-dimensional position of an object. In the stereo camera system, cameras are arranged at a plurality of positions to image the same object from a plurality of different viewpoints. Then, a distance from the deviation of the appearance in the obtained images, that is, a disparity, to a target object is calculated. In a general stereo camera system with two cameras, such conversion is represented by expressed by Expression 1 below.

[Math. 1]

$$Z = \frac{f}{w}\frac{B}{D}$$

Here, Z [mm] represents the distance to the target object, f [mm] represents the focal length, w [mm/px] represents the pixel pitch, B [mm] represents the distance (baseline length) between cameras, and D [px] represents the disparity.

In calculating the disparity, images captured from a plurality of positions are arranged horizontally, and a position in which a point which is the same as a specific point in the left image is captured in the right image is searched. In order to efficiently execute such a search, a parallelization process is generally executed advance.

Parallelization means vertical alignment of images. That is, parallelization is a process of calibrating the left and right images so that the same points in the left and right images are imaged at the same height.

In a parallelized image, when the corresponding point is searched, the point may be searched only for a certain horizontal row, and the processing efficiency is high. However, parallelization parameters may change due to an error during assembly or deterioration over time, and even the left and right images subjected to the parallelization process may have a vertical deviation. At this time, particularly in an area in which a straight line in an oblique direction is imaged, similar textures that may have different heights are imaged. Thus, an erroneous corresponding point is detected, and an error occurs in the three-dimensional position.

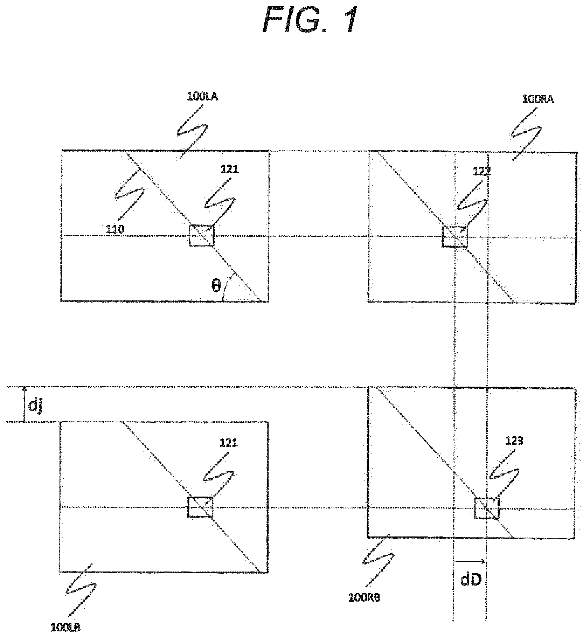

FIG. 1 is a diagram of a disparity error dD [px] when the deviation of dj [px] occurs in the vertical direction. A case where no height deviation occurs in a left image 100LA and a right image 100RA will be described. A position at which an object which is the same as an object in the left image 100LA is imaged in a search target 121 is searched from the right image 100RA, and then is matched. Thus, the amount of deviation of the image position from a matching target 122 is obtained as the disparity.

Meanwhile, a case where height deviation occurs in a left image 100LB and a right image 100RB will be described. The amount of deviation of the image position from the matching target 123 with respect to the same search target 121 is obtained as disparity. At this time, the positional deviation between 122 and 123 occurs as a disparity error dD [px]. If the slope of the straight line with respect to the horizontal is θ [rad], the disparity error dD is expressed by the following equation 2.

[Math. 2]

$$dD = \frac{dj}{\tan\theta}$$

That is, when a certain vertical deviation dj occurs, the disparity error dD has a function of the slope θ of the straight line, and thus it is understood that dD increases as θ approaches 0, that is, as the line approaches the horizon. Therefore, by eliminating the disparity having an edge in an angle θ direction close to the horizon, it is possible to eliminate the disparity having a possibility of including a large error.

In addition, here, with Expression 1, the distance error dZ [mm] when the disparity error dD occurs is expressed by Expression 3.

[Math. 3]

$$dZ = \frac{fB}{w}\left(\frac{dD}{D(D+dD)}\right)$$

Since f, B, and w are fixed by the camera, it is understood that the distance error dZ associated with the disparity error dD increases as the disparity D decreases. On the other hand, when D is sufficiently larger than dD, dZ becomes small. Thus, it is possible to ignore an influence on object detection and distance measurement.

Examples will be described below with reference to the drawings.

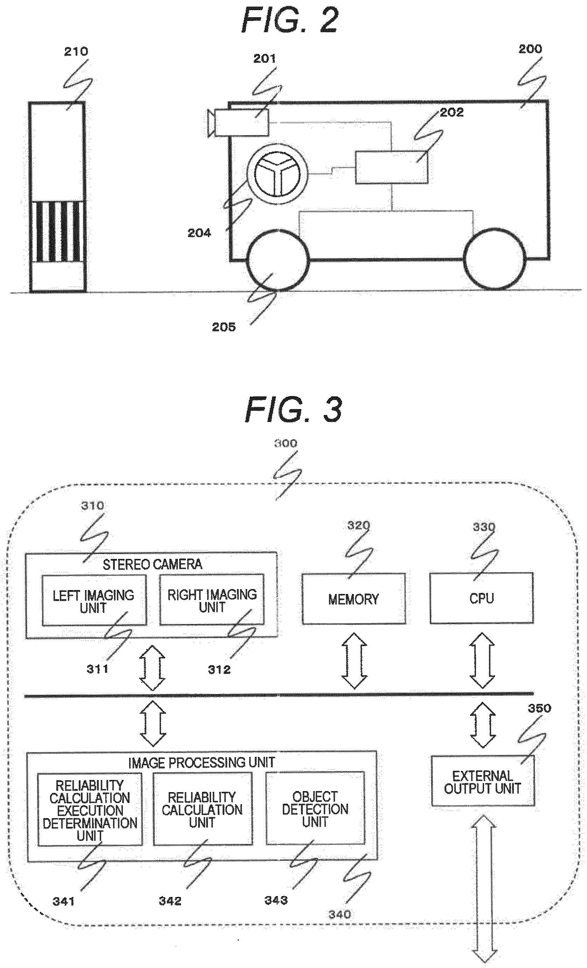

Firstly, the outline of a vehicle control system using a stereo camera equipped with an object detection device will be described with reference to FIG. 2. A stereo camera 201 is mounted in a vehicle 200. An object detection device is mounted in the stereo camera 201. For example, the object detection device measures a distance to an object 210 in front of the vehicle or a speed relative to the object, and then transmits a resultant to a vehicle control unit 202. The vehicle control unit controls a brake, an accelerator, and steering from the received distance and relative speed.

Next, the outline of the object detection device in the present invention will be described with reference to FIG. 3.

FIG. 3 illustrates the configuration of the object detection device in a first embodiment of the present invention. The object detection device includes a stereo camera 310, a memory 320, a CPU 330, an image processing unit 340, an external output unit 350, and the like. The stereo camera 310 includes a left imaging unit 311 and a right imaging unit 312 of the stereo camera, and images the front of the vehicle equipped with the stereo camera 310. The image processing unit 340 processes the obtained image, and thus object detection is performed based on disparity information generated by a disparity image generation unit (not illustrated) of the image processing unit 340 (not illustrated). A reliability calculation execution determination unit 341 determines whether or not it is necessary to discard the disparity in accordance with the reliability. When it is determined that it is necessary, the reliability calculation unit 342 calculates the reliability of the disparity, and the object detection unit 343 detects a three-dimensional object based on disparity and reliability. The detection result is transmitted from an external communication unit 350 to an image area of a processing device. When the stereo camera is an in-vehicle stereo camera, the detection result is used for determining vehicle control of an accelerator, a brake, steering, and the like.

Details of the reliability calculation execution determination unit 341 will be described below.

One of situations in which the influence of disparity deviation is particularly large, which is an issue in the present example, is a case of monitoring a place far from the stereo camera 310. Therefore, in a scene where it is necessary to monitor a distance place, the reliability is calculated using the edge angle and the disparity is eliminated using the reliability, and thereby the distance accuracy is improved or erroneous detection of an object is suppressed. In a scene where it is not necessary to monitor a distance place, the calculation of the reliability and the elimination of the disparity using the reliability are not executed, and thus the processing cost is reduced while suppressing the bounce such as undetection of an object.

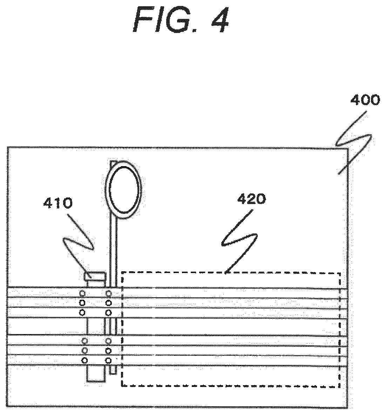

FIG. 4 illustrates a case where an object is not detected. When a camera image 400 is obtained by imaging a guardrail 410 facing the camera, an object configured only by straight lines in the substantially horizontal direction is imaged in an area 420. In particular, when the disparity having an edge which is substantially horizontal is intended to be eliminated without limitation, most of the disparity is eliminated in the area 420, and there is a possibility that the guardrail cannot be detected. Note that, although the guardrail is described here as an example, if the object includes many edges that are substantially horizontal, such as a vehicle viewed from the back, it may lead to undetection due to the elimination of disparity.

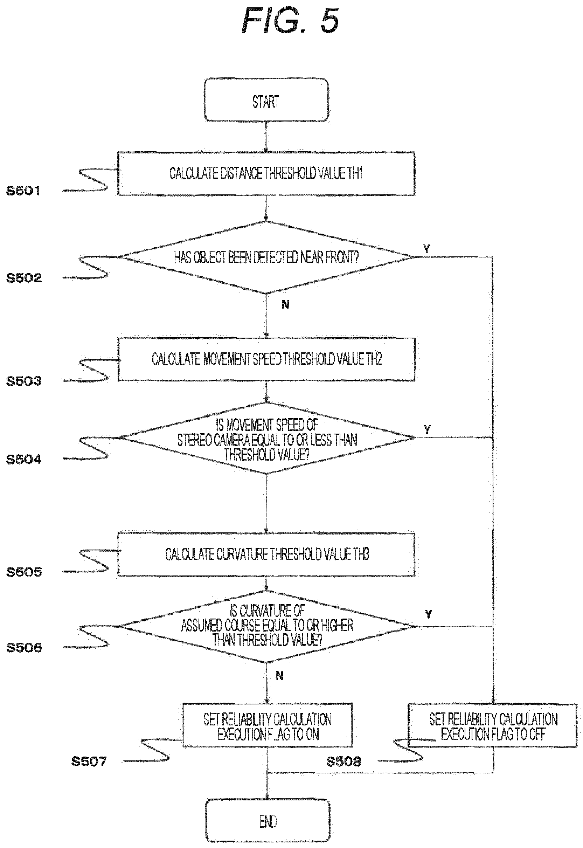

Next, FIG. 5 illustrates an example of a processing flow of the reliability calculation execution determination unit 341. Whether or not it is necessary to monitor a distant place is determined in processes from S501 to S506, and a flag is set in S507 and S508 in accordance with the determination result.

(S501) The reliability calculation execution determination unit calculates a distance threshold TH1 used in S502 being the subsequent process. Calculation means will be described later.

(S502) With reference to the object detection result before a time (t-1) from a processing time t, when an object has been detected at a place within a range of the threshold value TH1, it is determined that the reliability calculation is not executed. For example, when an object has been detected in the vicinity of the front of the own vehicle, the detection result of the object in the distance place does not affect the control of the vehicle.

(S503) A movement speed threshold TH2 used in S504 being the subsequent process is calculated. Calculation means will be described later.

(S504) When the movement speed of the stereo camera is smaller than the threshold value TH2, it is determined that the reliability calculation is not executed. When a stereo camera is mounted on a moving object such as a car and control is performed based on the detection result, it is necessary to detect an object farther away as the moving object moves at a high speed and reflect the detected object in the control. When moving at a low speed, a possibility of the detection result in the distance place affecting the control is low, and thus monitoring in the distance is unnecessary.

(S505) A reliability calculation execution determination unit calculates a curvature threshold TH3 used in S506 being the subsequent process. Calculation means will be described later.

(S506) When the curvature of the assumed course is higher than the threshold value TH3, it is determined that the reliability calculation is not executed. When the vehicle travels in a curve in the left-right direction, the vehicle does not pass through the detection position even though an object is detected at a distance from the front. Thus, it is unlikely to affect the control, so that monitoring at a distance place is unnecessary. Regarding the calculation means of the curvature, for example, in a case of a vehicle, the curvature may be calculated from a physical model using a steering angle or yaw rate, or may be calculated using a white line or a road edge detection function. Alternatively, the curvature of a road to be scheduled to travel may be based on a GPS and map information. The calculation of the curvature is not limited to at least one of the calculation methods, and any known method in which calculation can be performed in a manner similar to the calculation methods may be adopted. Further, the determination may be executed using a plurality of threshold values or a threshold value calculated by a weighted average or the like.

As a result of various determination processes, when it is determined that the reliability calculation should not be executed in any of the determination processes, a reliability calculation execution flag is set to be OFF in S508, and the reliability calculation process is not executed.

A method of calculating the threshold values for various determination processes will be described. If there is an error in disparity, there are two possible adverse effects on object detection.

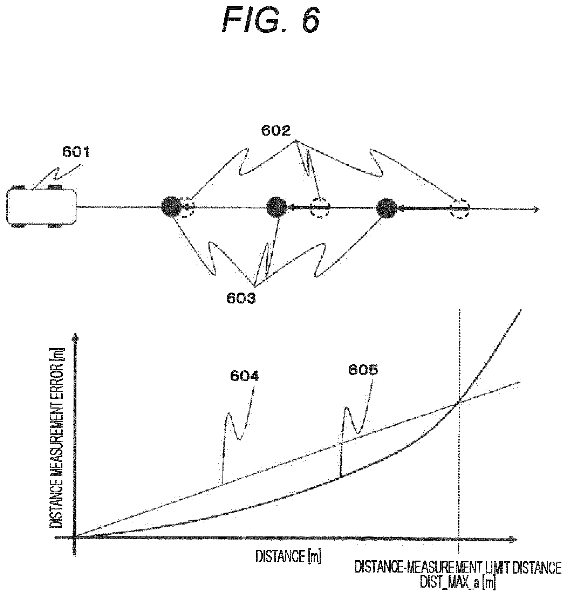

The first is an error in distance measurement. As represented in Expression 3, the distance measurement error associated with the disparity error is larger as the distance increases. FIG. 6 illustrates a diagram for explaining the method of calculating the disparity limit distance that can be used for distance measurement. When an object 602 indicated by the dotted line is disposed with respect to a vehicle 601 equipped with the stereo camera, the distance measurement is erroneously performed like that the object is actually located at a position 603 indicated by the black circle due to a certain disparity error. The relation between the distance and the distance measurement error at this time is indicated by the reference sign 605 in the graph at the bottom of FIG. 6. The distance-measurement limit distance DIST_MAX_a [m] is set to a place in which the distance measurement error exceeds the allowable value. For example, if the allowable value is set to be within 5% of the actual distance, the allowable value is indicated as the reference sign 604, and the intersection of the reference sign 604 and the reference sign 605 is the distance measurement limit.

The second is an error in height or horizontal position. Since the disparity error causes a position error in an optical center direction of the camera, for example, an error dY in a height direction is represented by Expression 4 with respect to the height Y of the actual camera.

[Math. 4]

$$dY = Y \frac{dD}{D + dD}$$

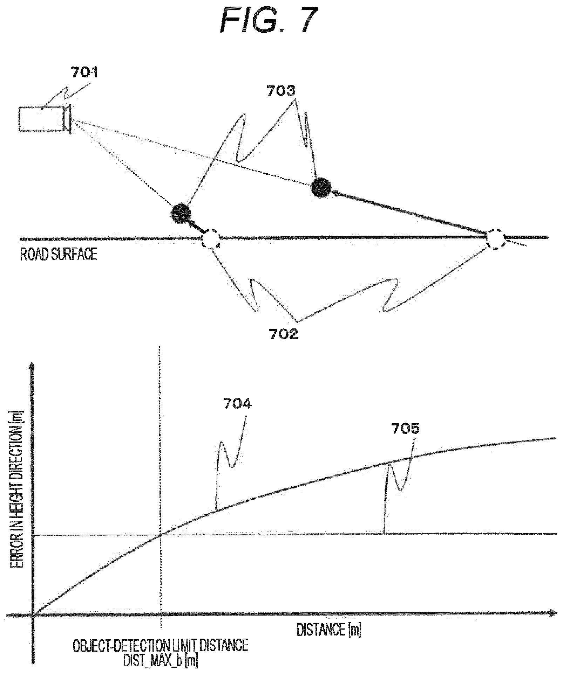

When such an error is large, there is a possibility that the disparity obtained from the ground is erroneously detected as an obstacle being provided. FIG. 7 illustrates a diagram for explaining a method of calculating the limit distance for object detection due to an error in the height direction. With respect to the stereo camera 701, the position for an observation point 702 on the road surface, which is indicated by a dotted line is erroneously measured like that the object is actually at a position 703 indicated by a black circle due to a certain disparity error.

The relation between the distance and the error in the height direction at this time is indicated by the reference sign 704 in the graph at the bottom of FIG. 7. An object-detection limit distance DIST_MAX_b [m] is set to a place in which the height error exceeds the allowable value.

For example, if the object detection function in the subsequent stage has the specifications of detecting only a group of disparity having a height of 50 [cm] or higher from the road surface as an object, the allowable value is indicated as the reference sign 705 as the allowable value of 50 [cm], and the intersection of the reference sign 704 and the reference sign 705 is the object detection limit. The distance-measurement limit distance and the object-detection limit distance may be used separately depending on the function. Here, for the simplicity, the two values are compared, and the limit value on the closer side is set to DIST_MAX [m] and is set as the limit distance enabling the disparity to be used in object detection. In each of the determination processes, it is determined whether or not the object detection should be executed farther than DIST_MAX. When it is necessary to detect the object at a distance place, elimination of the disparity by the reliability may be set to be required, and a flag may be set to execute reliability calculation.

In S502 in FIG. 5, if the distance of an object detected up to the previous frame is closer than DIST_MAX, it is not necessary to eliminate the disparity.

In S504, for example, for an emergency braking function for collision avoidance, it is possible to calculate the maximum movement speed at which collision avoidance is possible for an object spaced by DIST_MAX, from the braking performance of the moving object. When the moving object moves slower than this speed, it is not necessary to eliminate the disparity.

With S506, it is possible to calculate the minimum curvature for traveling outside the angle of view of the stereo camera when traveling by DIST_MAX. When the curvature of the course is larger than this curvature, even though an object farther than DIST_MAX is seen, the moving object does not travel at that position, and it is not necessary to eliminate the disparity.

Since the various determination processes are independent of each other, it is not necessary to determine all of the processes, and it is not necessary to execute all of the processes in this order. Only necessary determinations may be executed in accordance with the components at the time of execution.

Next, the details of the reliability calculation unit 342 will be described.

The purpose of the present example is to eliminate the disparity at the position where an oblique line close to the horizon is imaged. In the stereo camera, when calculating the disparity of a certain point, the area around the point is designated as a matching block, and matching of the left and right images are performed based on image information in the matching block.

Therefore, the edge of the image information in the matching block may be calculated, and the reliability may be calculated in accordance with the edge angle.

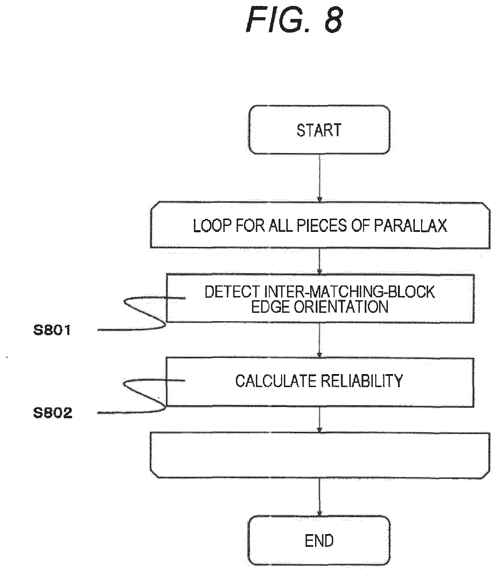

FIG. 8 illustrates a flowchart of the reliability calculation unit. In S801, the edge orientation in the matching block is detected. A Sobel filter or the like is exemplified as general edge detection means. The Sobel filter is a filter that detects edges by multiplying nine (3 × 3) pixel values centered on a certain interest pixel by a matrix such as Expressions 5 and 6 as follows, and then

summing the results.

[Math. 5]

$$EdgeH = \begin{pmatrix} -1 & 0 & 1 \\ -2 & 0 & 2 \\ -1 & 0 & 1 \end{pmatrix}$$

[Math. 6]

$$EdgeV = \begin{pmatrix} -1 & -2 & -1 \\ 0 & 0 & 0 \\ 1 & 2 & 1 \end{pmatrix}$$

EdgeH indicates the horizontal edge strength and EdgeV indicates the vertical edge strength. Using the two values, the final edge strength S and orientation φ are expressed by Expressions 7 and 8 below.

[Math. 7]

$$S = \sqrt{EdgeH^2 + EdgeV^2}$$

[Math. 8]

$$\phi = \text{atan}\left(\frac{EdgeH}{EdgeV}\right)$$

With the above calculation, edge information is calculated for each pixel. Note that it is necessary to consider the reliability of disparity not only for one pixel but for the entire matching block, but this will be described together with the reliability calculation in the subsequent stage.

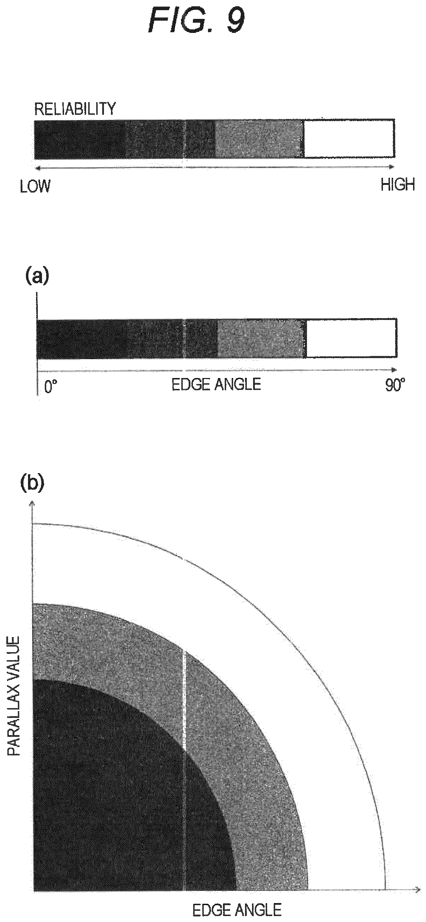

Then, the reliability of disparity is calculated in S802. For example, when, for simplicity, the reliability is expressed as 1 and 0 indicating whether the reliability can or cannot be used, the number of pixels having the angle φ which is within the range of the horizontal direction ± α in the matching block may be counted. When the number of pixels is equal to or more than a threshold value, the reliability is set to 0. Alternatively, as described above, the closer the edge angle is to the horizontal, the larger the error is. Therefore, the reliability may be changed depending on the edge angle. As illustrated in FIG. 9(a), the edge angle is the lowest at 0° and the highest at 90°. Further, considering the degree of influence when converted to a distance, even if the edge angle is equal, the reliability is low when the disparity value is small. The reliability is high when the disparity value is large. As illustrated in FIG. 9(b), even though the edge angle is equal, the smaller the disparity value is, the lower the reliability can be set. For example, it is conceivable to express this relation by Expression 9 as follows. Dmax [px] indicates the maximum value that can be taken by the disparity.

[Math. 9]

$$R = |sin\phi| * \left| sin\left(\frac{\pi}{2}\frac{D}{D_{max}}\right) \right|$$

The following Expression 10 in Expression 9 is a term relating to the angle of the edge.

[Math. 10]

$$|sin\phi|$$

The φ used here needs to be a typical angle of the matching block, not the edge angle of only one pixel. As a calculation method, methods such as a method of creating a histogram for each predetermined angle and using the peak position as the typical angle, and a method of taking a weighted average using the edge strength from all the edges voted in the peak range, and the like can be considered.

In Expression 9, Expression 11 as follows is a term relating to the magnitude of disparity.

[Math. 11]

$$\left| sin\left(\frac{\pi}{2}\frac{D}{D_{max}}\right) \right|$$

The calculation of reliability is not limited to Expression 11 because the calculation depends on the required specifications of the object detection function in the subsequent stage. However, the calculation is designed as a function which decreases when the edge angle is horizontal and increases when the edge angle is vertical, and decreases when the disparity is small and increases when the disparity is large.

Next, the details of the object detection unit 343 will be described.

The object detection unit 343 calculates the coordinates of a point in the real space from the disparity information and image coordinates corresponding to the disparity information. The distance between the points is calculated for each point, the points in the vicinity are grouped, and the points are detected as one three-dimensional object.

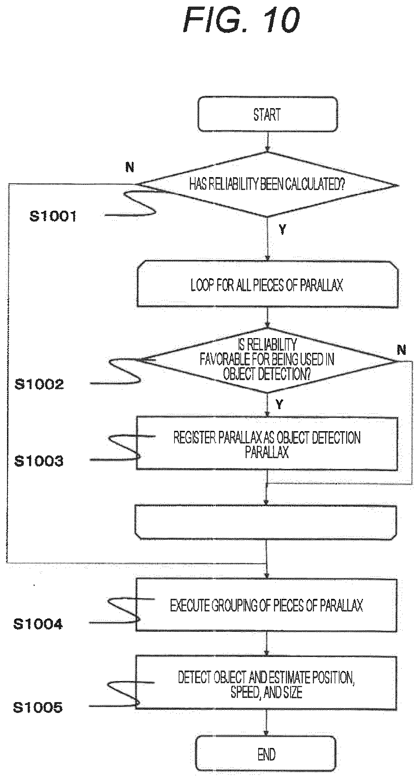

FIG. 10 illustrates a flowchart of the object detection unit in the present example.

(S1001) It is determined whether the reliability has been calculated. This is for the followings. That is, when with reference to the result of the reliability calculation-unit execution determination unit 341, the calculation of the reliability as a scene in which disparity should not be eliminated is not performed, three-dimensional object detection using only the disparity is executed. In the following, in S1002 and S1003, a loop process is executed for all pieces of disparity.

(S1002) disparity having reliability that is equal to or higher than the threshold value is determined to be desirable for being used in object detection.

(S1003) The disparity is registered and a disparity point group data that is desirable for being used in object detection is generated.

(S1004) After the disparity registration is completed, points in the vicinity in the real space are grouped.

(S1005) The distance and the vertical and horizontal size of the object are calculated from the result of grouping. The resultant is form-corrected and output as the object detection result.

According to the object detection device in Example 1 described above, it is possible to provide an object detection device capable of ensuring disparity calculation accuracy even if there is vertical-direction image deviation and suppressing performance degradation and processing cost growth

Example 2

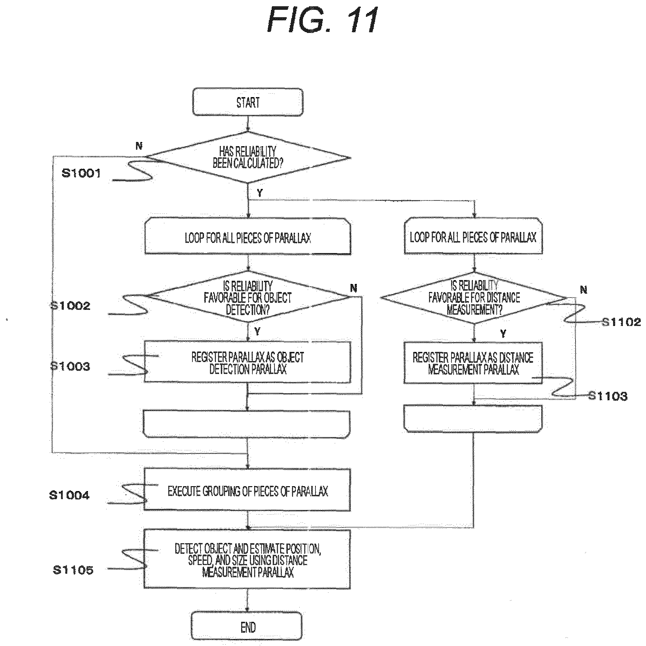

Example 2 is a modification example of Example 1. In Example, 2, an embodiment in which the object detection unit 343 classifies the pieces of disparity into a plurality of types according to the reliability will be described. As described in Example 1, there are cases as follows, as the influence by the disparity error: (1) a case where the error is caused by the deviation in the depth direction and where an object is correctly detected, but the distance is incorrect; and (2) a case where the error is caused by the deviation in the height or the left-right direction, and where an object is erroneously detected in an area in which the object is not present. In Example 2, it is possible to set the limit distance depending on the characteristics of each of the cases. By calculating the reliability in consideration of each limit distance, the object detection unit 343 can classify and use the disparity into the disparity which is desirable for being used in distance measurement, the disparity desirable for being in object detection, and the disparity which is not used in any measurement. FIG. 11 illustrates a flowchart of the object detection unit 343 in the present example.

In Example 1, the disparity having a large distance measurement error is also not used for the object detection. However, the present example has a flow in which such disparity is used at the stage of the object detection and is eliminated in distance measurement.

(S1102), (S1103) Referring to the reliability with a threshold value different from that in S1002 and S1003 in FIG. 10, the disparity desirable for being used in distance measurement is registered.

(S1105) When the position and the speed of the detected object are calculated, by performing estimation using only the disparity registered as the disparity for distance measurement, it is possible to improve distance measurement accuracy while suppressing the undetection due to excessive elimination of the disparity.

According to the above object detection device, it is possible to provide an object detection device in a stereo camera system that does not fail to detect an object to be detected by eliminating disparity.

The present invention is not limited to the above examples, and various modification examples may be provided.

For example, the above examples is described in detail in order to explain the present invention in an easy-to-understand manner, and the above embodiment is not necessarily limited to a case including all the described configurations. Further, some components in one example can be replaced with the components in another example, and the configuration of another example can be added to the configuration of one example. Regarding some components in the examples, other components can be added, deleted, and replaced.

In addition, some or all the above components may be configured by hardware, or may be configured to be realized by a processor executing a program. Control lines and information lines considered necessary for the descriptions are illustrated, and not all the control lines and the information lines in the product are necessarily shown. In practice, it may be considered that almost all components are connected to each other.

Reference Signs List

310    imaging unit
342    reliability calculation unit
341    reliability calculation execution determination unit
343    object detection unit

**Claims**

1.  An object detection device, comprising:

an imaging unit (310) configured to obtain a plurality of images;
a disparity image generation unit configured to generate disparity information from the images acquired from the imaging unit (310);
a reliability calculation unit (342) configured to use edge orientations in a matching block to calculate reliabilities of each disparity in the disparity image, wherein the reliability calculation unit (342) is configured to determine the reliability of each disparity based on an angle and strength of edges within the matching block, wherein the matching block is a region surrounding each pixel in the disparity image;

a reliability calculation execution determination unit (341) configured to determine whether or not to execute reliability calculation, wherein the reliability calculation execution determination unit (341) is further configured to calculate a distance threshold (TH1); and

an object detection unit (343) configured to detect an object (602, 210) using the generated disparity information and the calculated reliabilities when the reliability calculation execution determination unit (341) determines that reliability calculation is to be executed, and wherein reliability calculation is not executed when the object is detected within a range of the distance threshold (TH1).

2. The object detection device according to claim 1, wherein the reliability calculation unit (342) is configured to use the edge orientation in the matching block and an obtained disparity value to calculate the reliabilities.

3. The object detection device according to claim 1, wherein the reliability calculation execution determination unit (341) is configured to determine whether or not to calculate the reliabilities using detection information of the object, movement speed information of a vehicle (601, 200), or travel road information in front of the vehicle (601, 200).

4. The object detection device according to claim 1, wherein the object detection unit (343) classifies the disparity images into object detection disparity and distance measurement disparity depending on the reliabilities.

**Patentansprüche**

1. Objektdetektionsvorrichtung, umfassend:

eine Bildgebungseinheit (310), die konfiguriert ist, um eine Vielzahl von Bildern zu erhalten;
eine Disparitätsbilderzeugungseinheit, die konfiguriert ist, um Disparitätsinformationen aus den von der Bildgebungseinheit (310) erfassten Bildern zu erzeugen;
eine Zuverlässigkeitsberechnungseinheit (342), die konfiguriert ist, um Kantenorientierungen in einem Übereinstimmungsblock zu verwenden, um Zuverlässigkeiten jeder Disparität in dem Disparitätsbild zu berechnen, wobei die Zuverlässigkeitsberechnungseinheit (342) konfiguriert ist, um die Zuverlässigkeit jeder Disparität basierend auf einem Winkel und einer Stärke von Kanten innerhalb des Übereinstimmungsblocks zu bestimmen, wobei der Übereinstimmungsblock ein Bereich ist, der jedes Pixel in dem Disparitätsbild umgibt;

eine Zuverlässigkeitsberechnungsausführungsbestimmungseinheit (341), die konfiguriert ist, um zu bestimmen, ob eine Zuverlässigkeitsberechnung auszuführen ist oder nicht, wobei die Zuverlässigkeitsberechnungsausführungsbestimmungseinheit (341) ferner konfiguriert ist, um einen Abstandsschwellenwert (TH1) zu berechnen; und

eine Objektdetektionseinheit (343), die konfiguriert ist, um ein Objekt (602, 210) unter Verwendung der erzeugten Disparitätsinformationen und der berechneten Zuverlässigkeiten zu detektieren, wenn die Zuverlässigkeitsberechnungsausführungsbestimmungseinheit (341) bestimmt, dass eine Zuverlässigkeitsberechnung auszuführen ist, und wobei eine Zuverlässigkeitsberechnung nicht ausgeführt wird, wenn das Objekt innerhalb eines Bereichs des Abstandsschwellenwerts (TH1) detektiert wird.

2. Objektdetektionsvorrichtung nach Anspruch 1, wobei die Zuverlässigkeitsberechnungseinheit (342) konfiguriert ist, um die Kantenorientierung in dem Übereinstimmungsblock und einen erhaltenen Disparitätswert zu verwenden, um die Zuverlässigkeiten zu berechnen.

3. Objektdetektionsvorrichtung nach Anspruch 1, wobei die Zuverlässigkeitsberechnungsausführungsbestimmungseinheit (341) konfiguriert ist, um zu bestimmen, ob die Zuverlässigkeiten unter Verwendung von Detektionsinformationen des Objekts, Bewegungsgeschwindigkeitsinformationen eines Fahrzeugs (601, 200) oder Fahrstraßeninformationen vor dem Fahrzeug (601, 200) zu berechnen sind oder nicht.

4. Objektdetektionsvorrichtung nach Anspruch 1, wobei die Objektdetektionseinheit (343) die Disparitätsbilder in Abhängigkeit von den Zuverlässigkeiten in Objektdetektionsdisparität und Abstandsmessungsdisparität klassifiziert.

**Revendications**

1. Dispositif de détection d'objet, comprenant :

une unité d'imagerie (310) configurée pour obtenir une pluralité d'images ;
une unité de génération d'image de disparité configurée pour générer des informations de disparité à partir des images acquises à partir de l'unité d'imagerie (310) ;

une unité de calcul de fiabilité (342) configurée pour utiliser des orientations de bord dans un bloc de correspondance pour calculer des fiabilités de chaque disparité dans l'image de disparité, dans lequel l'unité de calcul de fiabilité (342) est configurée pour déterminer la fiabilité de chaque disparité sur la base d'un angle et d'une intensité de bords dans le bloc de correspondance, dans lequel le bloc de correspondance est une région entourant chaque pixel dans l'image de disparité ;

une unité de détermination d'exécution de calcul de fiabilité (341) configurée pour déterminer s'il faut ou non exécuter un calcul de fiabilité, dans lequel l'unité de détermination d'exécution de calcul de fiabilité (341) est en outre configurée pour calculer un seuil de distance (TH1) ; et

une unité de détection d'objet (343) configurée pour détecter un objet (602, 210) en utilisant les informations de disparité générées et les fiabilités calculées lorsque l'unité de détermination d'exécution de calcul de fiabilité (341) détermine qu'un calcul de fiabilité doit être exécuté, et dans lequel

le calcul de fiabilité n'est pas exécuté lorsque l'objet est détecté dans une plage du seuil de distance (TH1).

2. Dispositif de détection d'objet selon la revendication 1, dans lequel l'unité de calcul de fiabilité (342) est configurée pour utiliser l'orientation de bord dans le bloc de correspondance et une valeur de disparité obtenue pour calculer les fiabilités.

3. Dispositif de détection d'objet selon la revendication 1, dans lequel l'unité de détermination d'exécution de calcul de fiabilité (341) est configurée pour déterminer s'il faut ou non calculer les fiabilités en utilisant des informations de détection de l'objet, des informations de vitesse de déplacement d'un véhicule (601, 200), ou des informations de route de déplacement devant le véhicule (601, 200).

4. Dispositif de détection d'objet selon la revendication 1, dans lequel l'unité de détection d'objet (343) classe les images de disparité en disparité de détection d'objet et disparité de mesure de distance en fonction des fiabilités.

# FIG. 1

# FIG. 2

# FIG. 3

## FIG. 4

## FIG. 5

START

S501 — CALCULATE DISTANCE THRESHOLD VALUE TH1

S502 — HAS OBJECT BEEN DETECTED NEAR FRONT? — Y

N

S503 — CALCULATE MOVEMENT SPEED THRESHOLD VALUE TH2

S504 — IS MOVEMENT SPEED OF STEREO CAMERA EQUAL TO OR LESS THAN THRESHOLD VALUE? — Y

S505 — CALCULATE CURVATURE THRESHOLD VALUE TH3

S506 — IS CURVATURE OF ASSUMED COURSE EQUAL TO OR HIGHER THAN THRESHOLD VALUE? — Y

N

S507 — SET RELIABILITY CALCULATION EXECUTION FLAG TO ON

S508 — SET RELIABILITY CALCULATION EXECUTION FLAG TO OFF

END

# FIG. 6

# FIG. 7

ROAD SURFACE

701
703
702

ERROR IN HEIGHT DIRECTION [m]

704
705

DISTANCE [m]

OBJECT-DETECTION LIMIT DISTANCE
DIST_MAX_b [m]

# FIG. 8

```
                    ┌─────────────────┐
                    │      START      │
                    └─────────────────┘
                             │
                             ▼
      ┌──────────────────────────────────────────────┐
      │        LOOP FOR ALL PIECES OF PARALLAX         │
      └──────────────────────────────────────────────┘
                             │
                             ▼
          ┌──────────────────────────────────────┐
          │     DETECT INTER-MATCHING-BLOCK        │
          │         EDGE ORIENTATION               │
S801      └──────────────────────────────────────┘
                             │
                             ▼
          ┌──────────────────────────────────────┐
          │        CALCULATE RELIABILITY           │
S802      └──────────────────────────────────────┘
                             │
                             ▼
      ┌──────────────────────────────────────────────┐
      │                                                │
      └──────────────────────────────────────────────┘
                             │
                             ▼
                    ┌─────────────────┐
                    │       END       │
                    └─────────────────┘
```

# FIG. 9

RELIABILITY

LOW                                             HIGH

(a)

0°                EDGE ANGLE            90°

(b)

PARALLAX VALUE

EDGE ANGLE

# FIG. 10

START

S1001 — HAS RELIABILITY BEEN CALCULATED? — N

Y

LOOP FOR ALL PIECES OF PARALLAX

S1002 — IS RELIABILITY FAVORABLE FOR BEING USED IN OBJECT DETECTION? — N

Y

S1003 — REGISTER PARALLAX AS OBJECT DETECTION PARALLAX

S1004 — EXECUTE GROUPING OF PIECES OF PARALLAX

S1005 — DETECT OBJECT AND ESTIMATE POSITION, SPEED, AND SIZE

END

# FIG. 11

```
                          ┌──────────────┐
                          │    START     │
                          └──────┬───────┘
                                 │
              N        ◇─────────┴─────────◇
        ┌───────────── │   HAS RELIABILITY  │
        │  S1001       │  BEEN CALCULATED?   │
        │              ◇─────────┬─────────◇
        │                        │ Y
        │        ┌───────────────┴────────────────────────────┐
        │        │                                            │
        │ ┌──────┴──────────────────┐        ┌────────────────┴─────────┐
        │ │LOOP FOR ALL PIECES OF   │        │LOOP FOR ALL PIECES OF    │
        │ │PARALLAX                 │        │PARALLAX                  │
        │ └──────┬──────────────────┘        └────────────────┬─────────┘
        │        │                                            │
        │   ◇────┴─────◇       N              ◇───────────────┴──◇     N
S1002   │   │IS RELIABILITY │──────┐          │IS RELIABILITY      │────────┐
        │   │FAVORABLE FOR  │      │          │FAVORABLE FOR       │        │
        │   │OBJECT         │      │          │DISTANCE            │    S1102│
        │   │DETECTION?     │      │          │MEASUREMENT?        │        │
        │   ◇────┬─────◇          │          ◇───────────────┬──◇         │
        │        │ Y              │                           │ Y          │
        │ ┌──────┴──────────┐     │          ┌────────────────┴─────────┐  │
S1003   │ │REGISTER PARALLAX│     │          │REGISTER PARALLAX AS      │  │
        │ │AS OBJECT        │     │          │DISTANCE MEASUREMENT      │  │
        │ │DETECTION PARALLAX│    │          │PARALLAX                  │  │
        │ └──────┬──────────┘     │          └────────────────┬─────────┘  │
        │        │◄───────────────┘                           │◄───────────┘ S1103
        │ ┌──────┴──────────┐                ┌────────────────┴─────────┐
        │ │                 │                │                          │
        │ └──────┬──────────┘                └────────────────┬─────────┘
        │◄───────┘                                            │
   ┌────┴────────────────────────┐                            │
S1004│EXECUTE GROUPING OF PIECES  │                           │
   │ OF PARALLAX                  │                           │
   └────┬────────────────────────┘                           │
   ┌────┴────────────────────────┐◄──────────────────────────┘
   │DETECT OBJECT AND ESTIMATE    │
S1105│POSITION, SPEED, AND SIZE   │
   │USING DISTANCE MEASUREMENT    │
   │PARALLAX                      │
   └────┬────────────────────────┘
        │
   ┌────┴────┐
   │   END   │
   └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 13062087 A

- US 2003227378 A1